# EUROPEAN PATENT APPLICATION

(11) **EP 3 610 732 A1**
(43) Date of publication of application: **19.02.2020**
(21) Application number: 18189168.0
(22) Date of filing: 15.08.2018
(51) Int. Cl.: A21B 3/04, F24C 15/32

(54) **METHOD FOR CONTROLLING A STEAM GENERATING SYSTEM FOR A COOKING OVEN WITH STEAM COOKING FUNCTION AND STEAM GENERATING SYSTEM**

(71) Applicant: ELECTROLUX APPLIANCES AKTIEBOLAG, 105 45 Stockholm (SE)
(72) Inventor: BANZATO, Massimo, 47100 Forli (IT); CARNEVALI, Marco, 47100 Forli (IT); PATELLA, Claudia, 47100 Forli (IT); DELL'OLIO, Alberto, 47100 Forli (IT)
(74) Representative: Electrolux Group Patents

(57) **Abstract**

The present invention relates to a method for controlling a steam generating system (10) for a cooking oven with steam cooking function. The method comprises the steps of detecting a water level (22) in a control chamber (18), wherein said control chamber (18) and a steam generator (30) form communicating vessels in a first step (52); activating the steam generator (30) in a second step (54), if the water level (22) is at its maximum value; opening an inlet valve (16) for supplying the steam generator (30) in a third step (56), if the water level (22) reaches its minimum level, while said the steam generator (30) remains activated; and if the water level (22) is beneath its minimum value in the first step (52), then the inlet valve (16) is opened in a further step (62), while the steam generator (30) remains deactivated.

## Description

The present invention relates to a method for controlling a steam generating system for a cooking oven with steam cooking function. Further, the present invention relates to a steam generating system for a cooking oven with steam cooking function. Moreover, the present invention relates to a cooking oven with steam cooking function.

Steam cooking processes become more and more important, since steam cooking provides great tasting food and preserves the nutrients naturally present in the food. A lot of domestic cooking ovens comprise steam cooking functions. For example, a steam generating system is arranged outside the oven cavity, wherein the steam will be injected into said oven cavity by one or more nozzles.

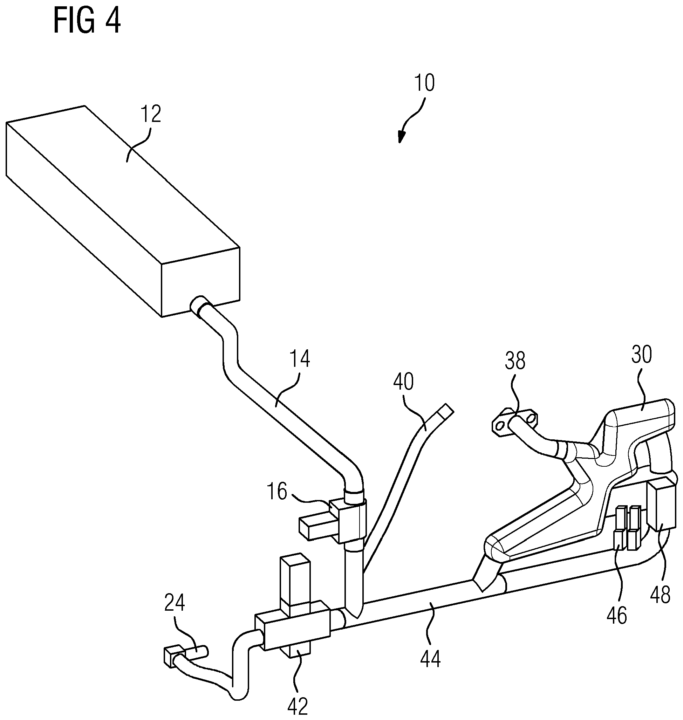

A conventional steam generating system 10 for the cooking oven with steam cooking function is shown in FIG 4. The steam generating system 10 of the prior at comprises a water tank 12, a water loading tube 14, an inlet valve 16, an air tube 40, a drain valve 42, a multi-connection tube 44, a steam generator 30 and a steam nozzle 38. The steam generator 30 includes a first thermal sensor 46 and a second thermal sensor 48 arranged within and/or at said steam generator 30. The drain valve 42 is connected to the drain 24 of an oven cavity. The water tank 12 is connected to the inlet valve 16 via the water loading tube 14. The outlets of the inlet valve 16 and drain valve 42 are connected to the steam generator 26 via the multi-connection tube 44. The air tube 40 is interconnected between the multi-connection tube 44 and the oven cavity. The steam generator 30 is connected to the oven cavity via the steam nozzle 38. The water tank 12 is arranged above the inlet valve 16, so that the water is delivered by gravity from the water tank 12 through the water loading tube 14 to the inlet valve 16. The drain valve 42 remains in the closed state, unless a drain or service function is activated. When the temperature in the steam generator 30 rises above a predefined threshold value, said steam generator 30 is deactivated, while the inlet valve 16 is open at the same time. Then, water flows through the multi-connection tube 44 into the steam generator 30 and cools it down. When the temperature in the steam generator 30 returns below the threshold value, then the inlet valve 16 is closed and the steam generator 30 is activated again.

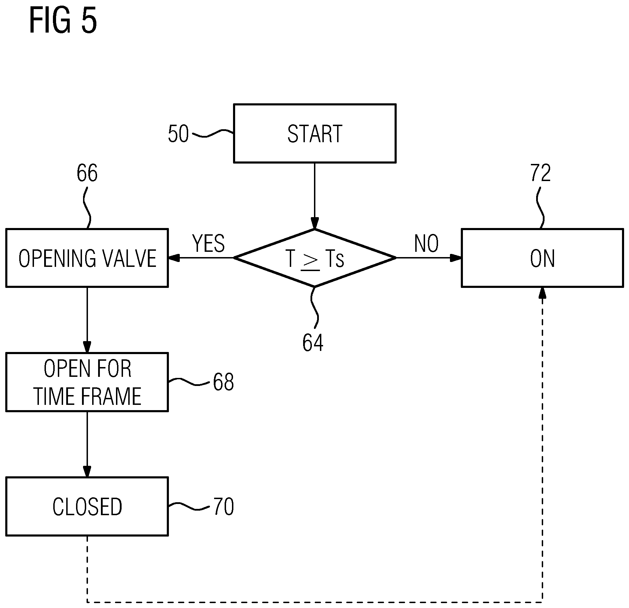

FIG 5 illustrates a schematic flow chart diagram of the method for controlling the steam generating system 10 of the cooking oven with steam cooking function according to the prior art. In a first step 50 the method is started. In a next step 64 it is checked, if the detected temperature T is higher than a set threshold temperature value Ts. If the detected temperature T is higher than the set threshold temperature value Ts, then the inlet valve 16 is opened in a step 66. During next step 68 said inlet valve 68 remains open for a predetermined time frame. Then, the inlet valve 16 is closed in a step 70. Then, the steam generator 30 is activated in a step 72. However, if the detected temperature T in the step 64 is lower than the set threshold temperature value Ts, then the steam generator 30 is activated in the step 72.

In the prior art, the inlet valve 16 is opened for a fixed time. If the steam generator 30 is not cooled down, the inlet valve 16 will be opened for said fixed time only. When there is lack of water in the steam generator 30, then said steam generator 30 remains activated and temperature peaks may occur. Since the quantity of water is minimal, this results in loss of energy. Moreover, the system of the prior art requires a continuous control of the temperature.

It is an object of the present invention to provide a method for controlling a steam generating system for a cooking oven with steam cooking function, which avoids temperature peaks by low complexity.

The object of the present invention is achieved by the method according to claim 1.

According to the present invention a method for controlling a steam generating system for a cooking oven with steam cooking function, wherein said method comprises the steps of:
- detecting a water level in a control chamber, wherein said control chamber and a steam generator form communicating vessels, in a first step,
- activating the steam generator in a second step, if the water level is at its maximum value,
- opening an inlet valve for supplying the steam generator (30) with water in a third step, if the water level reaches its minimum level, while said the steam generator remains activated, and
- if the water level is beneath its minimum value in the first step, then the inlet valve is opened in a further step, while the steam generator remains deactivated.

The core of the present invention is that the activation of the steam generator depends on the water level in the control chamber and factually on the water level in the steam generator itself. Since the steam generator is activated at a certain water level, temperature peaks are avoided.

Preferably, after the third step it is checked in a fourth step, if the time for refilling the steam generator exceeds a threshold time value.

If the time for refilling the steam generator exceeds the threshold time value in the fourth step, then the steam generator may be deactivated and the inlet valve is closed in a further step, and then the inlet valve is opened in a subsequent step, while the steam generator remains deactivated.

However, if the time for refilling the steam generator is less than the threshold time value in the fourth step, then the inlet valve may be closed in the second step, while the steam generator remains activated.

Further, the present invention relates to a steam generating system for a cooking oven with steam cooking function, wherein said steam generating system comprises:
- at least one steam generator,
- at least one water tank arranged above the steam generator,
- at least one inlet valve interconnected between the water tank and the steam generator,
- at least one control chamber connected to the steam generator via a water tube and arranged at the same level as said steam generator, so that the control chamber and the steam generator form communicating vessels,
- at least one water level sensor arranged inside and/or upon the control chamber, and
- at least one control unit for activating and deactivating the steam generator and for opening and closing the inlet valve.

Particularly, the steam generator is activatable and deactivable in dependence of the water level in the control chamber. Preferably, the inlet valve is openable and closable in dependence of the water level in the control chamber.

For example, the water level sensor is a capacitive sensor. The water level sensor also may be other kinds of sensors.

Further, the steam generator may include at least one limiting sensor. This is an additional safety device.

Moreover, the control chamber and the steam generator are connected by a water tube arranged beneath said control chamber and steam generator. The water tube allows that the control chamber and the steam generator form communicating vessels.

Additionally, the water tube may be connectable or connected to a drain of an oven cavity via a descaling actuator.

Furthermore, the steam generating system may comprise at least one steam nozzle arrangeable or arranged at a wall of the oven cavity and connected to an outlet of the steam generator.

Moreover, the steam generator may include at least one condenser.

The steam generating system may be provided for the method mentioned above.

At last, the present invention relates to a cooking oven with steam cooking function provided for the method described above and/or comprising the steam generating system mentioned above.

Novel and inventive features of the present invention are set forth in the appended claims.

The present invention will be described in further detail with reference to the drawings, in which
- FIG 1: illustrates a schematic front view of a steam generating system for a cooking oven with steam cooking function according to a preferred embodiment of the present invention,
- FIG 2: illustrates a schematic front view of the steam generating system for the cooking oven with steam cooking function according to the preferred embodiment of the present invention,
- FIG 3: illustrates a schematic flow chart diagram of a method for controlling the steam generating system of the cooking oven with steam cooking function according to the preferred embodiment of the present invention,
- FIG 4: illustrates a schematic perspective view of the steam generating system for the cooking oven with steam cooking function according to the prior art, and
- FIG 5: illustrates a schematic flow chart diagram of the method for controlling the steam generating system of the cooking oven with steam cooking function according to the prior art.

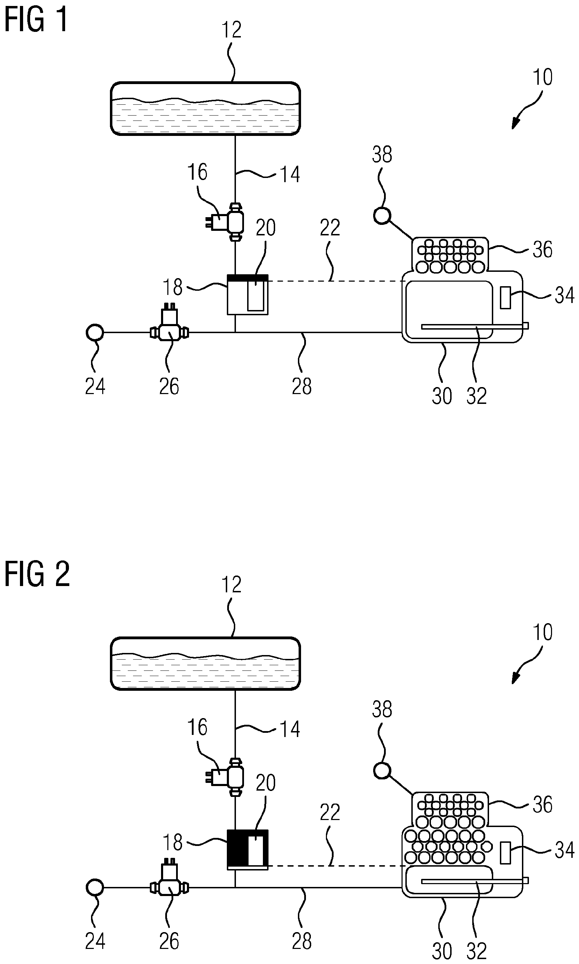

FIG 1 illustrates a schematic front view of a steam generating system 10 for a cooking oven with steam cooking function according to a preferred embodiment of the present invention.

The steam generating system 10 comprises a water tank 12, a water loading tube 14, an inlet valve 16, a control chamber 18, a descaling actuator 26, a water tube 28, a steam generator 30 and a steam nozzle 38. The control chamber 18 includes a water level sensor 20. In this example, the water level sensor 20 is arranged inside the control chamber 18. Alternatively, the water level sensor 20 is arranged upon said control chamber 18. The steam generator 30 includes a heating element 32, a limiting sensor 34 and a condenser 36. Further, the steam generating system 10 comprises a control unit for activating and deactivating the steam generator 30 and for opening and closing the inlet valve 16, wherein said control unit is not explicitly shown in FIG 1.

The water tank 12 is connected to the inlet valve 16 via the water loading tube 14. In turn, the inlet valve 16 is connected to the control chamber 18. Alternatively, the control chamber 18 may be integrated with the inlet valve 16. The control chamber 18 is connected to the steam generator 30 via the water tube 28. Further, said water tube 28 is connected to a drain 24 of the oven cavity via the descaling actuator 26.

The control chamber 18 and the steam generator 30 are arranged at the same level. The control chamber 18, the water tube 28 and the steam generator 30 form communicating vessels. Thus, a water level 22 in the control chamber 18 corresponds with the water level 22 in the steam generator 30. The water level sensor 20 in the control chamber 18 detects factually the water level 22 in the steam generator 30. In this example, the water level sensor 20 is a capacitive sensor. In general, the water level sensor 20 may be an arbitrary sensor suitable for detecting the water level. In FIG 1 the water level 22 has the maximum value.

Further, the control chamber 18 and the steam generator 30 are connected to the drain of the oven cavity via the water tube 28 and the descaling actuator 26.

The steam generator 30 may be L-shaped, linear, square or rectangular. The limiting sensor 34 acts as a safety device for the steam generator 30.

FIG 2 illustrates a schematic front view of the steam generating system 10 for the cooking oven with steam cooking function according to the preferred embodiment of the present invention. In FIG 2 the water level 22 in the control chamber 18 and the steam generator 30 has the minimum value.

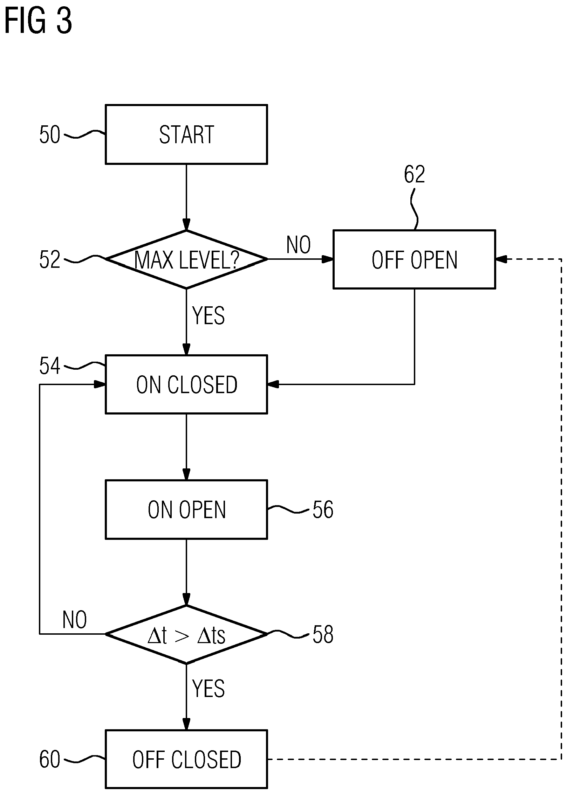

FIG 3 illustrates a schematic flow chart diagram of the method for controlling the steam generating system 10 of the cooking oven with steam cooking function according to the preferred embodiment of the present invention.

In the first step 50 the method is started. In a step 52 it is checked, if the water level 22 in the control chamber 18 and in the steam generator 30 is at the maximum level. If the water level 22 is at the maximum level, then the steam generator 30 is activated and the inlet valve 16 is closed in a step 54. When the water level 22 reaches the minimum level in the control chamber 18 and the steam generator 30, then in a step 56 the inlet valve 16 is opened, while the steam generator 30 remains activated.

In a step 58 it is checked, if the time Δt for refilling the steam generator 30 is bigger than the threshold time value Δts for refilling said steam generator 30. If the time Δt for refilling the steam generator 30 exceeds said threshold time value Δts, then the steam generator 30 is deactivated and the inlet valve 16 is closed in a step 60. In a next step 62, the inlet valve 16 is opened again, while the steam generator 30 remains deactivated. Then, the steam generator 30 is activated again and the inlet valve 16 is closed again in the step 54.

However, if in the step 58 the time Δt for refilling the steam generator 30 is lower than the threshold time value Δts, then the steam generator 30 remains activated, but the inlet valve 16 is closed again in the step 54. Then, the method is set forth by the steps 56 and 58 again.

FIG 4 illustrates a schematic perspective view of the steam generating system 10 for the cooking oven with steam cooking function according to the prior art.

The steam generating system 10 of the prior art comprises the water tank 12, the water loading tube 14, the inlet valve 16, an air tube 40, a drain valve 42, a multi-connection tube 44, the steam generator 30 and the steam nozzle 38. The steam generator 30 includes a first thermal sensor 46 and a second thermal sensor 48 arranged within and/or at said steam generator 30. The drain valve 42 is connected to the drain 24 of the oven cavity.

The water tank 12 is connected to the inlet valve 16 via the water loading tube 14. The drain valve 42 is connected to the drain 24 of the oven cavity. The outlets of the inlet valve 16 and drain valve 42 are connected to the steam generator 26 via the multi-connection tube 44. The air tube 40 is interconnected between the multi-connection tube 44 and the oven cavity. The steam generator 30 is connected to the oven cavity via the steam nozzle 38.

The water tank 12 is arranged above the inlet valve 16, so that the water is delivered by gravity from the water tank 12 through the water loading tube 14 to the inlet valve 16. The drain valve 42 remains in the closed state, unless a drain or service function is activated.

When the temperature in the steam generator 30 rises above a predefined threshold value, said steam generator 30 is deactivated, while the inlet valve 16 is open at the same time. Then, water flows through the multi-connection tube 44 into the steam generator 30 and cools it down. When the temperature in the steam generator 30 returns below the threshold value, then the inlet valve 16 is closed and the steam generator 30 is activated again.

FIG 5 illustrates a schematic flow chart diagram of the method for controlling the steam generating system 10 of the cooking oven with steam cooking function according to the prior art.

In the first step 50 the method is started. In a step 64 it is checked, if the detected temperature T is higher than a set threshold temperature value Ts. If the detected temperature T is higher than the set threshold temperature value Ts, then the inlet valve 16 is opened in a step 66. During next step 68 said inlet valve 68 remains open for a predetermined time frame. Then, the inlet valve 16 is closed in a step 70. Then, the steam generator 30 is activated in a step 72.

However, if the detected temperature T in the step 64 is lower than the set threshold temperature value Ts, then the steam generator 30 is activated in the step 72.

In the prior art, the inlet valve 16 is turned on for a fixed time. If the steam generator 30 is not cooled down, the inlet valve 16 will be opened for said fixed time only. When there is lack of water in the steam generator 30, then said steam generator 30 remains activated and temperature peaks occur. Since the quantity of water is minimal, this results in loss of energy. Moreover, the system of the prior art requires a digital control unit and a continuous control of the temperature.

The method and system according to the present invention avoid temperature peaks in the steam generator 30, since said steam generator 30 works only, if there is sufficient water therein. When lack of water is detected, then the system is refilled with water. The supply of water is interrupted only, if the water level 22 is at its maximum value. Further, the number of the openings and closings of the inlet valve 16 is minimised.

Although an illustrative embodiment of the present invention has been described herein with reference to the accompanying drawings, it is to be understood that the present invention is not limited to that precise embodiment, and that various other changes and modifications may be affected therein by one skilled in the art without departing from the scope or spirit of the invention. All such changes and modifications are intended to be included within the scope of the invention as defined by the appended claims.

### List of reference numerals

- 10: steam generating system
- 12: water tank
- 14: water loading tube
- 16: inlet valve
- 18: control chamber
- 20: water level sensor
- 22: water level
- 24: drain of oven cavity
- 26: descaling actuator
- 28: water tube
- 30: steam generator
- 32: heating element
- 34: limiting sensor
- 36: condenser
- 38: steam nozzle
- 40: air tube
- 42: drain valve
- 44: multiconnection tube
- 46: first thermal sensor
- 48: second thermal sensor
- 50: step of starting the method
- 52: step of checking maximum level
- 54: step of activated steam generator and closed inlet valve
- 56: step of activated steam generator and opened inlet valve
- 58: step of comparing emptying time and filling time
- 60: step of deactivated steam generator and closed inlet valve
- 62: step of activated steam generator and opened inlet valve
- 64: step of comparing temperature and set threshold value
- 66: step of opening inlet valve
- 68: step of keeping open inlet valve during a time frame
- 70: step of closing inlet valve
- 72: step of activating steam generator
- T: temperature
- Ts: threshold temperature value
- Δt: time for refilling steam generator
- Δts: threshold time value for refilling steam generator

## Claims

1. A method for controlling a steam generating system (10) for a cooking oven with steam cooking function, wherein said method comprises the steps of:
- detecting a water level (22) in a control chamber (18), wherein said control chamber (18) and a steam generator (30) form communicating vessels, in a first step (52),
- activating the steam generator (30) in a second step (54), if the water level (22) is at its maximum value,
- opening an inlet valve (16) for supplying the steam generator (30) with water in a third step (56), if the water level (22) reaches its minimum level, while said the steam generator (30) remains activated, and
- if the water level (22) is beneath its minimum value in the first step (52), then the inlet valve (16) is opened in a further step (62), while the steam generator (30) remains deactivated.

2. The method according to claim 1,
**characterised in that**
after the third step (56) it is checked in a fourth step (58), if the time (Δt) for refilling the steam generator (30) exceeds a threshold time value (Δts).

3. The method according to claim 2,
**characterised in that**
if the time (Δt) for refilling the steam generator (30) exceeds the threshold time value (Δts) in the fourth step (58), then the steam generator (30) is deactivated and the inlet valve (16) is closed in a further step (60), and then the inlet valve (16) is opened in a subsequent step (62), while the steam generator (30) remains deactivated.

4. The method according to claim 2,
**characterised in that**
if the time (Δt) for refilling the steam generator (30) is less than the threshold time value (Δts) in the fourth step (58), then the inlet valve (16) is closed in the second step (54), while the steam generator (30) remains activated.

5. A steam generating system (10) for a cooking oven with steam cooking function, wherein said steam generating system (10) comprises:
- at least one steam generator (30),
- at least one water tank (12) arranged above the steam generator (30),
- at least one inlet valve (16) interconnected between the water tank (12) and the steam generator (30),
- at least one control chamber (18) connected to the steam generator (30) via a water tube (28) and arranged at the same level as said steam generator (30), so that the control chamber (18) and the steam generator (30) form communicating vessels,
- at least one water level sensor (20) arranged inside and/or upon the control chamber (18), and
- at least one control unit for activating and deactivating the steam generator (30) and for opening and closing the inlet valve (16).

6. The system according to claim 5,
**characterised in that**
the steam generator (30) is activatable and deactivable in dependence of the water level (22) in the control chamber (18).

7. The system according to claim 5 or 6,
**characterised in that**
the inlet valve (16) is openable and closable in dependence of the water level (22) in the control chamber (18).

8. The system according to claim any one of the claims 5 to 7,
**characterised in that**
the water level sensor (20) is a capacitive sensor.

9. The system according to any one of the claims 5 to 8,
**characterised in that**
the steam generator (30) includes at least one limiting sensor (34).

10. The system according to any one of the claims 5 to 9,
**characterised in that**
the control chamber (18) and the steam generator (30) are connected by a water tube (28) arranged beneath said control chamber (18) and steam generator (30).

11. The system according to claim 10,
**characterised in that**
the water tube (28) is connectable or connected to a drain (24) of an oven cavity via a descaling actuator (26).

12. The system according to any one of the claims 5 to 11,
**characterised in that**
the steam generating system (10) comprises at least one steam nozzle (38) arrangeable or arranged at a wall of the oven cavity and connected to an outlet of the steam generator (30).

13. The system according to any one of the claims 5 to 12,
**characterised in that**
the steam generator (30) includes at least one condenser (36) .

14. The system according to any one of the claims 5 to 13,
**characterised in that**
the system is provided for the method according to any one of the claims 1 to 4.

15. A cooking oven with steam cooking function,
**characterised in that**
the cooking oven is provided for the method according to any one of the claims 1 to 4 and/or comprises at least one steam generating system (10) according to any one of the claims 5 to 8.
